# EUROPEAN PATENT APPLICATION

(11) **EP 0 575 286 A1**
(43) Date of publication of application: **22.12.1993**
(21) Application number: 93610038.7
(22) Date of filing: 15.06.1993
(51) Int. Cl.: B65D 65/40, B65D 81/20

(54) **Backing board for packaging of food products and machinery for producing same**

(30) Priority: 15.06.1992 DK 793/92; 25.06.1992 DK 839/92
(71) Applicant: Larsen, Steen, DK-7080 Börkop (DK)
(72) Inventor: Larsen, Steen, DK-7080 Börkop (DK)
(74) Representative: Pedersen, Soeren Skovgaard

(57) **Abstract**

A backing plate for use in packings of food products such as salmon sides, fillets and whole salmon, where the product is placed on the support plate and then vacuum packed in a plastic sheet, comprises two pieces of cardboard glued together and laminated with a plastic sheet at both the front and the rear sides. The side of the cardboard pieces which is to be glued to the opposite piece consists of a layer which is less water resistant than the other layers, and the applied glue is a water based glue, which will penetrate into the less water resistant layers and after curing render the two joined layers stiff and water resistant. The resulting plate member is very stiff and is made with a very cheap glue having no harmful additives. Lacquer print in the negative may be provided on the plastic sheet coating, or the glue used for holding the plastic sheet may be dyed. The food product will not, then, come into touch with the lacquer, but exclusively with the plastic sheet.

A machinery for producing these plates comprises suspension means (2) for at least two rolls of material, a gluing station (6) for glueing the material webs together, a feeding station (8) having pull-out rollers for intermittently advancing the material. Cutting disks (10) serve to cut the width and a cross beam cutter (12) the lengths of the backing plates.

## Description

The present invention relates to a backing board to be employed at the packing of food products, preferably sides of salmon, fillets and whole salmon, whereby the product is placed on the backing board and thereafter vacuum packed in a plastic sheet, the backing board being made of cardboard laminated with sheet material at both sides. The invention, furthermore, relates to a machinery for manufacturing such backing boards.

As food, salmon is regarded a noble kind of fish of high quality, and therefore, it is marketed in a package which correspondingly presents the product and also meets the sanitary demands. Thus, smoked sides of salmon and sliced fillets are typically packed fully stretched or spread on a so-called salmon board and are vacuum packed in a transparent plastic sheet printed with information and ornamentation, preferably multicoloured, but placed such that at least most of the salmon will be visible on the background of the salmon board. The salmon board is rectangular and a little larger than the salmon side and it is basically a piece of cardboard laminated with a lacquered aluminium foil. The quality demands to such salmon boards are high, but, on the other hand they are also required to be non-expensive. One of the requirements is that the salmon board should be stiff and thin and have a low specific weight as well as a minimum of edge absorption. The front and back sides of the salmon boards are liquid-sealed due to the aluminium foil cover, while the edges of the board are exposed. An edge absorption resulting in a delamination of the cardboard or a marked swelling of the edge area will be unacceptable. Therefore it is necessary to employ a cardboard which is fairly waterproof. Nevertheless, some absorption will always occur, and for that reason the specific weight of the cardboard should be as low as possible. Any absorbed humidity originates from the packed product whereby the product weight is reduced, and the higher the amount of absorbed moisture, the higher also the weight reduction. Thus, the weight of the product, when received by the consumer, is less than the original packing weight. For this reason the producer has to weigh out the products with a certain overweight to ensure that the product has the declared weight, when reaching the consumer. This, of course, is not satisfactory to the producer. If the cardboard is thin, then the edge absorption will become reduced, but on the other hand the cardboard should have a certain thickness in order to be as stiff as required.

The upper surface of the aluminium foil layer is lacquered with a background colour which displays the salmon; typically a golden or black colour is chosen for the side carrying the salmon and a silver colour is used for the rear side. The salmon is laid directly on the lacquer, which is not particularly suitable. However, a main objection is raised against the aluminium foil itself, as such a foil is not approved for food packing purposes. Furthermore, it is difficult to print on aluminium foil due to poor adhesion, which may result in unwanted voids in the lacquer, whereby the salmon may come in direct contact with the aluminium, resulting in miscolouring of the salmon. Furthermore, the lacquer easily cracks by the subsequent freezing of the packed product as well as by bending of the cardboard. The salmon boards are cut out from larger sheets, and by the cutting and rounding of the edges aluminium dust will appear on the cardboard members, this being unfortunate due to a miscolouring of the salmon as mentioned above.

According to the present invention, by manufacturing the backing boards from two lengths of cardboard with a plastic sheet laminated onto one side, some of the drawbacks mentioned are avoided in that a cardboard is employed which has an outermost layer that is less water resistant than the remaining part of the cardboard. In or by its manufacturing process, cardboard adopts a stratified structure and this makes it possible to adapt the outermost layer of that side of the cardboard, which is to be laminated, to be less water resistant. For the gluing together of the pieces of cardboard it is thus possible to use a water based glue which penetrates into the less water resistant layer and after curing provides for these two layers to become stiff and water resistant. The result is a very stiff product obtained by employing a very cheap glue without any harmful additives.

The plastic sheet first of all eliminates the problems connected with the use of aluminium foil. Furthermore, by the invention it is also possible to avoid that the food products get in touch with the lacquer, this being achievable in two different ways, of which one is that the laminated plastic sheet is printed with the lacquer in the negative, i.e. on the side facing the cardboard. The other way is that the glue, which is employed to laminate the plastic sheet, is dyed to the desired colour. Compared with the colouring by lacquering the upper surface of the plastic sheet a small difference in the hue of the colours may be experienced, but this is fully acceptable as the advantage is achieved that the food product can now be laid on an approved plastic film and not on a lacquer surface. Furthermore, the use of the plastic sheet makes it possible in a more suitable and simple manner to provide printing on the backing boards, viz. by printing the plastic sheet with a grouped print in negative.

It has been mentioned that the salmon board can be rectangular, but it may also be quadratic or have any other desired shape.

The detailed choice of material will depend on the practical use of the invention; as examples can be mentioned polyethylene, polyester, polypropylene and polystyrene, while the cardboard can be a five-layer cardboard, of which one layer is a little less water resistant than the other layers, resulting in a supporting board consisting of eight water resistant layers, and in which the two layers glued together, due to the gluing, are also water resistant.

A machinery for manufacturing these backing boards from rolls of material is characterized in that it comprises suspension means for rolls of pasteboard, cardboard or paper enabling unrolling of such material, a gluing station for gluing the material webs together, a pull-out station comprising pull-out rollers for intermittently pulling out of the material web at a length corresponding to one of the edge lengths of the cardboard member's cutting disks arranged for cutting the material into longitudinally oriented strips of a width corresponding to the other edge width of the cardboard members, and at least one crossbeam cutter oriented transversely to the material web for cutting the same crosswise by the intermittent feeding of the web so as to cut out the single members. I.e. the advanced material is cut into strips corresponding to the width of the board, alternatively the length, the strips thereupon transversely being cut into single pieces corresponding to the length of the board, alternatively the width. By using the complete width of the advanced material it is put to an optimum degree of utilization. The cutting disks may in general be arranged on a common rotating shaft and may be fastened dislocateably along the shaft. The machinery is independent of the width of the supply roll of the material as the cutting disks can be dislocated accordingly. The machinery can be adjusted to the required width of the strips by adjusting the cutting disks, and the cut lengths are determined by the advancing at the intermittent operation of the advancing station. This can be governed by the automatic control system of the machinery. When the crossbeam cutter is arranged immediately after the cutting disks the free strip lengths become reduced and the transverse cutting by means of the crossbeam cutter is carried out more easily. A further embodiment permits the cutting of two sets of backing boards to take place in that two crossbeam cutters are sequentially arranged in the machinery and the advancing lengths are adjusted to the double lengths. The lengths of the backing boards may be adjusted in that the hindmost of the crossbeam cutters is supported in guide rails permitting a to and fro moving in relation to the first crossbeam cutter. If the cutting disks are put out of operation, possibly except the two outermost ones, the crossbeam cutter is able to cut out sheets of the material rolls. It is to be noticed that the advanced material has to retain a correct tension, such that it is neither too slack nor too taut. Another advantage attained by the machinery according to the invention is that it can be constructed of per se well known elements which are known for their wearing qualities and reliability.

A further embodiment according to the invention is characterized in that it comprises suspensions for at least one further supply roll of material and a gluing station for gluing the webs together. In general, two webs are glued together, but gluing of more webs is possible. Such embodiment permits the employing of the machinery as a laminating machine.

Summed up the machinery is flexible, it lends itself to easy readjustment and does not require any costly tools; likewise the amount of waste is next to none.

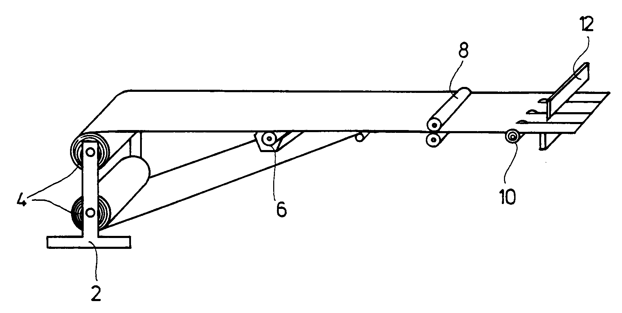

An embodiment of the machinery according to the invention for manufacturing a backing plate, namely a salmon board from two lengths of cardboard, with a plastic sheet laminated onto one side, is described in the following with reference to the drawing which schematically shows the machinery.

The machinery comprises the following main elements: A suspending structure 2 for two rolls of cardboard 4, a gluing station 6, an advancing station 8, cutting disks 10 and a crossbeam cutter 12.

The cardboard rolls are arranged horizontally above each other in the suspending structure 2 and unrolling from the uppermost one takes place clockwise while the lowermost is unrolled counter-clockwise. The cardboard from the uppermost roll is led through the gluing station 6, i.e. the cardboard is led over a gluing roller providing the under side of the cardboard with glue. Together with the cardboard from the lowermost roll the cardboards are being led to an advancing station 8. To attain the glue penetrating into the cardboard and curing before it is led between the rollers of the advancing station there has to be a certain spacing between the gluing station 6 and the advancing station 8 said spacing adjusted according to the velocity of the cardboard. Positioned after the advancing station 8 a set of cutting disks 10 is employed to cut the cardboard into strips in accordance with the width of the salmon board. The cutting disks are arranged with a corresponding mutual spacing in the transverse direction of the machinery; and the two outermost cutting disks are used to smooth-cut the side edges of cardboard. The mutual spacings of the cutting disks are adjustable to the required width as well as according to the width of the cardboard rolls. Immediately after the cuttings disks 10 a crossbeam cutter 12 is arranged transversely to the advanced cardboard for cutting the strips into lengths. The advancing station 8 is operated intermittently, and the intermittent step-lengths are governed by an automatic control mechanism thus controlling the lengths of the cardboards. The crossbeam cutter 12 is operated when the cardboard stands still, thus cutting the strips into the predetermined lengths. The cardboard units may be collected manually or automatically.

It is appreciated that the machinery provides the advantage that it may be built of per se known elements being well known for their safe functionings.

Though the above described machinery is foreseen to the manufacturing of backing plates from two rolls of cardboard it is appreciated that the machinery also is applicable to cutting a single roll of cardboard into rectangular or quadratic elements, or even into strips. In such a case the advanced cardboard is by-passing the gluing station.

## Claims

1. A backing plate to be employed at the packing of food products, preferably sides of salmon, fillets and whole salmon, whereby the product is placed on the backing plates and thereafter vacuum packed in a plastic sheet, the backing plate being made of two pieces of glued-together cardboard laminated with a plastic sheet on both the front and the rear sides, characterized in that each of the cardboard pieces comprises at least two layers of which the layer glued to the corresponding layer of the other piece is somewhat less water resistant than the other layers, and that the glue used for the gluing together of the two pieces of cardboard is a water based glue which penetrates into the less water resistant layers and after curing renders the two layers glued together stiff and water resistant.

2. A backing plate according to claim 1 characterized in that the laminated plastic foil is coloured/printed in the negative.

3. A backing plate according to claim 1 characterized in that the glue used for holding the plastic sheet is dyed.

4. A machinery for producing backing plates according to claims 1-3 characterized in that it comprises suspension means (2) for rolls (4) of pasteboard, cardboard or paper enabling unrolling of such material, a gluing station (6) for gluing the material webs together, a pull-out station (8) comprising pull-out rollers for intermittently pulling out of the material web at a length corresponding to one of the edge lengths of the cardboard member's cutting disks (10) arranged for cutting the material into longitudinally oriented strips of a width corresponding to the other edge width of the cardboard members, and at least one crossbeam cutter (12) oriented transversely to the material web for cutting the same crosswise by the intermittent feeding of the web so as to cut out the single members.

5. A machinery according to claim 4 characterized in that it comprises two crossbeam cutters arranged one after the other, one of which preferably the hindmost one is supported in guide means permitting an adjustment of the mutual spacing between the knifes, and that the feeding means are adapted to advance the web at lengths corresponding to two plate members.
